# EUROPÄISCHE PATENTANMELDUNG

(11) **EP 1 843 066 A1**
(43) Veröffentlichungstag der Anmeldung: **10.10.2007**
(21) Anmeldenummer: 07005429.1
(22) Anmeldetag: 16.03.2007
(51) Int. Cl.: F16K 5/06, F17D 3/10, B65B 3/30

(54) **Einrichtung zum dosierten Abfüllen eines Mediums**

(30) Priorität: 18.03.2006 DE 10612551
(71) Anmelder: PFEIFFER CHEMIE-ARMATURENBAU GmbH, 47906 Kempen (DE)
(72) Erfinder: Druyen, Stephan, 47669 Wachtendonk (DE)
(74) Vertreter: Sroka, Peter-Christian

(57) **Zusammenfassung**

Eine Einrichtung zum dosierten Abfüllen eines Mediums, enthaltend einen eine Einlaßöffnung und eine Auslaßöffnung aufweisenden Gehäuseabschnitt sowie ein Absperrorgan (10), das zwischen einer die Einlaßöffnung mit der Auslaßöffnung verbindenden Öffnungsstellung und einer die Verbindung zwischen der Einlaßöffnung und der Auslaßöffnung unterbrechenden Schließstellung verstellbar ist, ist dadurch gekennzeichnet, daß das Absperrorgan als um eine Achse drehbares Hahnküken (10) ausgebildet ist, um eine insbesondere beim Abfüllen von hochviskosen Medien auftretende Fadenbildung zwischen dem gefüllten Behälter und der Abfülleinrichtung zu verhindern. Der in Strömungsrichtung unten liegende, vorzugsweise schneidenartig ausgebildete Öffnungsrand der Auslaßöffnung ragt in der Öffnungsstellung in den Hahnkükendurchgang (10.3), wodurch ein zusätzlicher positiver Effekt bei der Verhinderung einer Fadenbildung eintritt.

## Beschreibung

Die Erfindung betrifft eine Einrichtung zum dosierten Abfüllen eines Mediums, enthaltend eine Einlaßöffnung und eine Auslaßöffnung aufweisenden Gehäuseabschnitt sowie ein Absperrorgan, das zwischen einer die Einlaßöffnung mit der Auslaßöffnung verbindenden Öffnungsstellung und einer die Verbindung zwischen der Einlaßöffnung und der Auslaßöffnung unterbrechenden Schließstellung verstellbar ist.

Eine bekannte, in der EP 1 000 898 B1 beschriebene Abfülleinrichtung ist als sogenanntes Abfüllventil ausgestaltet, das ein Gehäuse mit einem vertikalen Durchlaß umfaßt, welches einer Einlaßöffnung oben und einer Auslaßöffnung am Boden aufweist. In dem Durchlaß ist ein Ventilkörper angeordnet, der oben an eine Betätigungsstange angeschlossen, mittels welcher der Ventilkörper in vertikaler Richtung verschoben werden kann. In der geschlossenen Stellung des Abfüllventils liegt der Ventilkörper in dichtender Weise gegen einen Ventilsitz an, der durch einen Kantenabschnitt der Auslaßöffnung gebildet ist. Zum Abfüllen eines Mediums wird bei an eine Versorgungsquelle angeschlossenem Gehäuse der Ventilkörper in einer translatorischen Bewegung ausreichend hoch angehoben, so daß das Medium in einen unterhalb des Abfüllventils angebrachten Behälter strömen kann. Um eine Feindosierung vornehmen zu können, kann der Ventilkörper stufenweise oder kontinuierlich abgesenkt werden, so daß der freie Strömungsquerschnitt im Bereich der Auslaßöffnung verkleinert wird. Ein Nachteil dieses bekannten Abfüllventils besteht darin, daß bei Abfüllmedien mit einer hohen Viskosität nach dem vollständigen Schließen des Ventils, d.h. Absenken des Ventilkörpers auf den Ventilsitz, noch Medienbestandteile an dem Ventilkörper und insbesondere auch im Randbereich der Ventilsitzöffnung haften bleiben, die beim Wegtransport des Abfüllbehälters z.B. als fadenartige Gebilde zwischen diesem Abfüllbehälter und dem Abfüllventil ausbilden können. Ein weiterer Nachteil dieses Abfüllventils besteht darin, das es nicht vorlauffrei ist, was soviel bedeutet, daß nach dem Schließen des Ventils innerhalb des Ventilgehäuses ein bestimmtes Mediumvolumen verbleibt, was insbesondere beim Übergang von einem Medium zu einem andersartigen Medium störend ist.

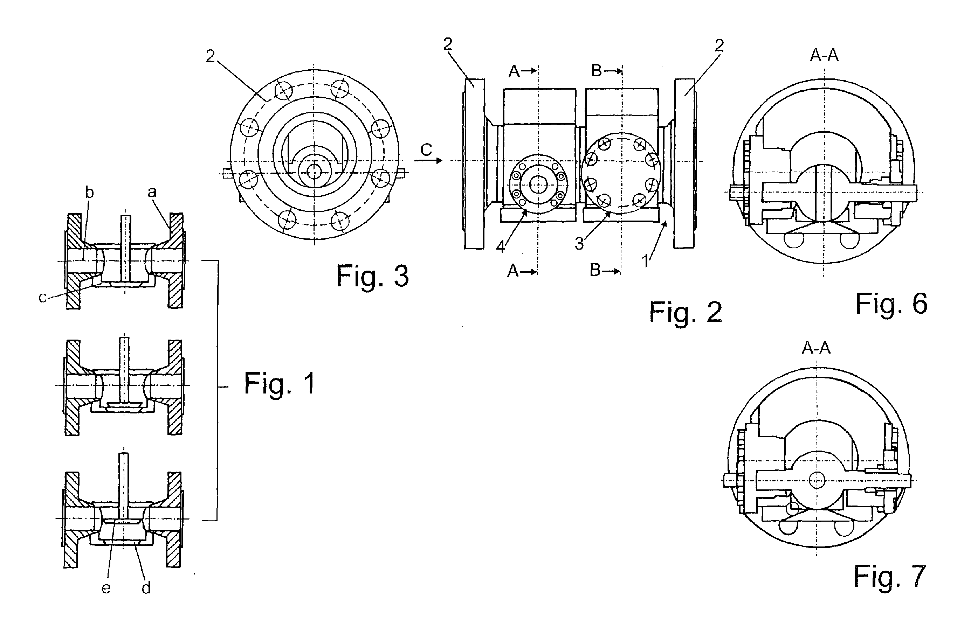

Es sind weiterhin sogenannte vorlauffreie Abfülleinrichtungen bekannt, die, wie in Figur 1 dargestellt, ein Rohrstück a mit einem durchgehenden Strömungskanal b aufweist, an den sich seitlich eine durch ein Ventilsitzgehäuse c definierte Ventilöffnung d anschließt, die mit einem translatorisch in vertikaler Richtung verstellbaren Tellerventil e zusammenwirkt, das mittels der Ventilstange f zwischen einer maximalen Grobstrom-Öffnungsstellung, einer Feinstrom-Öffnungsstellung und einer Schließstellung bewegbar ist. Ein derartiges Abfüllventil eignet sich damit auch für eine Feindosierung des abzufüllenden Mediums. Auch bei dieser Ventilanordnung besteht der Nachteil, daß insbesondere hochviskose Medien nach dem Schließen des Ventils noch an der Ventiltellerunterseite und im Bereich des Umfangrandes der Ventilsitzöffnung haften bleiben, wodurch es in der oben beschriebenen Weise zu einer Fadenbildung kommen kann.

Der Erfindung liegt die Aufgabe zugrunde, eine Abfülleinrichtung, die insbesondere zum Abfüllen hochviskoser oder höchstviskoser Medien geeignet ist, wobei es sich in erster Linie darum handelt, die sogenannte Fadenbildung zu verhindern.

Zur Lösung dieser Aufgabe ist die erfindungsgemäße Einrichtung dadurch gekennzeichnet, daß das Absperrorgan als um eine Achse drehbares Hahnküken ausgebildet ist. Bei der Verwendung eines drehbaren Hahnkükens besteht nahezu keine Möglichkeit, daß nach dem Drehen des Hahnkükens aus der Öffnungsstellung in die Schließstellung Medium an der rotationssymmetrisch ausgebildeten Kükenwand haftet bzw. haften bleibt, durch die die Auslaßöffnung der Abfülleinrichtung verschlossen wird. Gemäß einer bevorzugten Ausführungsform der Erfindung ist vorgesehen, daß das Hahnküken in der Schließstellung gegen einen der Auslaßöffnung zugeordneten Kükensitz anliegt, dessen in Strömungsrichtung unten liegender Öffnungsrand in der Öffnungsstellung in den Hahnkükendurchgang ragt. Eine derartige Ausgestaltung erhöht beim Schließen der Abfülleinrichtung den auf den Mediumstrom einwirkenden Abschervorgang des Mediumstroms. Dieser Effekt wird noch dadurch erhöht, wenn gemäß weiterer Erfindung der untere Öffnungsrand im wesentlichen schneidenartig ausgebildet ist.

Gemäß weiterer Erfindung liegt der Kükensitz auf einer Stützplatte auf, die eine der Öffnung des Kükensitzes im wesentlichen entsprechende Öffnung hat, die sich in Strömungsrichtung von oben nach unten kegelförmig erweitert, vorzugsweise mit einem Öffnungswinkel von mehr als 100 °, insbesondere im Bereich von etwa 120° bis 140°.

Das Hahnküken ist vorzugsweise als Kugelküken ausgebildet, wodurch sich gegenüber kegelförmigen oder zylindrischen Hahnküken im wesentlichen keine Abdichtungsprobleme ergeben.

Um eine vorlauffreie Abfülleinrichtung zu schaffen, weist diese ein Rohrstück mit einem durchgehenden Strömungskanal auf, an den sich seitlich die eigentliche Auslaßöffnung anschließt und in den das Hahnküken teilweise ragt.

Um einerseits einen schnellen Abfüllvorgang in einem Grobstrom zu ermöglichen und andererseits in einem Feinstrom ein genau dosiertes Abfüllen zu ermöglichen, schließen bei einem Rohrstück mit durchgehendem Strömungskanal an den Strömungskanal hintereinanderliegend vorzugsweise zwei ein Hahnküken aufweisende Gehäuseabschnitte an, wobei die Hahnkükendurchgänge unterschiedliche Strömungsquerschnitte haben, derart, daß das eine einen größeren Strömungsquerschnitt aufweisende Hahnküken für die Grobstromabfüllung und das andere Hahnküken für die Feinstromabfüllung benutzbar sind.

Die Erfindung betrifft weiterhin die Verwendung einer Einrichtung der erfindungsgemäßen Art zum Abfüllen eines hochviskosen Mediums, insbesondere eines Mediums mit einer dynamischen Viskosität im Bereich von etwa 100 - 1000 Pa·s (Pascalsekunde), z.B. im Bereich von etwa 600 Pa·s.

### Die Erfindung wird im folgenden unter Bezugnahme auf die beigefügten Figuren beschrieben:

Figur 1 zeigt im schematisierter Darstellung eine bekannte Abfülleinrichtung;
Figur 2 zeigt eine Seitenansicht einer Ausführungsform der erfindungsgemäßen Einrichtung;
Figur 3 zeigt eine Seitenansicht in Richtung des Pfeiles C in Figur 2;
Figur 4 zeigt eine Schnittansicht in Richtung der Schnittlinie B - B in der Offenstellung; Figur 5 zeigt eine Schnittansicht entsprechend Figur 4 in der Schließstellung;
Figur 6 zeigt eine Schnittdarstellung gemäß der Linie A - A in Figur 2 in der Öffnungs- bzw. Abfüllstellung;
Figur 7 eine Schnittansicht gemäß Figur 6 in der Schließstellung.

Die in der Zeichnung dargestellte Abfülleinrichtung enthält ein Rohrstück 1, das mittels Flanschen 2 in eine umlaufende Versorgungsleitung angeschlossen werden kann. Es sind zwei nur schematisiert dargestellte Abfülleinheiten 3 und 4 vorgesehen, von denen die Abfülleinheit 3 zum schnellen Abfüllen in einem Grobstrom dient, während die Abfülleinheit 4 gegen Ende des Abfüllvorgangs für eine feindosierte Abfüllung im Feinstrom vorgesehen ist.

Figur 3 gewährt einen Einblick in das Rohrstück in Richtung des Pfeiles C, und zeigt insbesondere die für die Abfüllung vorgesehene Abfülleinheit 4.

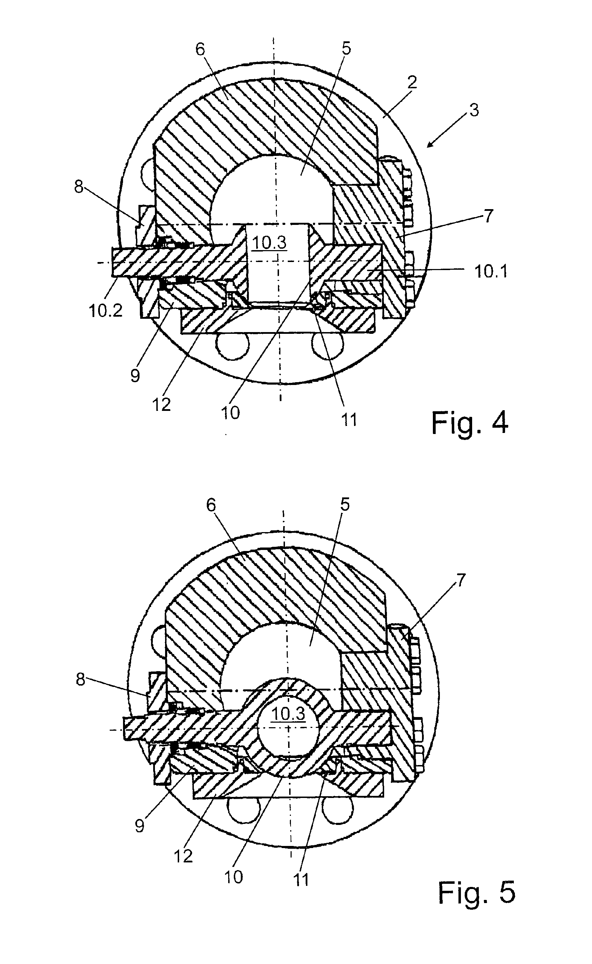

Figur 4 zeigt den Flansch 2 sowie den Durchlaßkanal 5 des Rohrstücks 1. Um diesen Durchlaßkanal 5 ist schellenartig eine aus mehreren Einzelteilen 6, 7, 8 und 9 bestehende Halterungs- bzw. Stützstruktur für ein Kugelküken 10 angeordnet, das teilweise in den Durchlaßkanal 5 ragt und teilweise durch eine in der den Durchlaßkanal 5 umgebenden Rohrwandung angebracht Öffnung unten aus dem Durchlaßkanal 5 herausgeführt ist. Das Kugelküken 10 ist in der Halterungsstruktur 6, 7, 8, 9 mittels Zapfen 10.1 und 10.2 drehbar gelagert, wobei der Zapfen 10.2 aus der Halterungsstruktur 6, 7, 8, 9 und hier insbesondere durch den Abschlußflansch 8 nach außen hindurch geführt ist, um als Antriebsspindel das Kugelküken 10 zwischen der in Figur 4 dargestellten Öffnungsstellung und der in Figur 5 dargestellten Schließstellung rotatorisch antreiben zu können.

Das Kugelküken 10 liegt an der Unterseite der Abfülleinrichtung gegen einen Kükensitz 11 an, dessen in Strömungsrichtung unten liegender Öffnungsrand in der Öffnungsstellung in den Hahnkükendurchgang 10.3 ragt. Der untere Öffnungsrand des Hahnkükensitzes 11 ist schneidenartig ausgebildet. Der Kükensitz 11 ist auf einer Stützplatte 12 abgestützt, die eine der Öffnung des Kükensitzes im wesentlichen entsprechende Öffnung hat, die sich in Strömungsrichtung von oben nach unten kegelförmig erweitert, vorzugsweise mit einem Öffnungswinkel von mehr als 100 °, insbesondere im Bereich von 120 ° bis 140 °. Der die Öffnung der Stützplatte 11 umgebende obere Öffnungsrand ist ebenfalls im wesentlichen schneidenartig ausgebildet.

Die Stützplatte 12 hat einen nach oben gerichteten, den Kükensitz 11 seitlich umschließenden Rand.

Es versteht sich, daß, wie bei Kugelhähnen üblich, an möglichen Leckagestellen entsprechende Dichtungen bzw. Packungen angeordnet sind, deren Konstruktion und Anbringungsweise nicht zum Gegenstand der vorliegenden Erfindung gehören.

Figur 5 zeigt die für die Grobabfüllung vorgesehene Abfülleinheit 3 in der Schließstellung des Kugelkükens 10.

Die Figuren 6 und 7 zeigen vergleichbar mit den Schnittansichten 4 und 5 der Grobstom-Abfülleinheit 3 entsprechende Ansichten der Feinstrom-Abfülleinheit 4, deren grundsätzlicher Aufbau dem Aufbau der Abfülleinheit 3 entspricht.

Das Absperrorgan kann erfindungsgemäß auch ein Kegelküken oder ein zylindrisches Küken sein.

Die erfindungsgemäße Einrichtung eignet sich insbesondere zum Abfüllen höchstviskoser Medien mit einer dynamischen Viskosität im Bereich von z.B. 600 Pa·s ; diese Medien werden, um sie fließfähig zu machen, hocherhitzt, z.B. auf Temperaturen im Bereich von 150 °C, wobei Abfülldrücke im Bereich von beispielsweise 15 bis 64 bar angewendet werden.

Um den angestrebten Schneid- bzw. Abschereffekt zu erreichen ist es erforderlich, das Hahnküken, insbesondere das Kugelküken mit hoher Beschleunigung und damit ensprechend hoher Geschwindigkeit in die Schließstellung zu bewegen.

## Patentansprüche

1. Einrichtung zum dosierten Abfüllen eines Mediums, enthaltend
- einen eine Einlaßöffnung und eine Auslaßöffnung aufweisenden Gehäuseabschnitt sowie
- einen Absperrorgan (10), das zwischen einer die Einlaßöffnung mit der Auslaßöffnung verbindende Öffnungsstellung und einer die Verbindung zwischen der Einlaßöffnung und der Auslaßöffnung unterbrechenden Schließstellung verstellbar ist,
**dadurch gekennzeichnet, daß** das Absperrorgan als um eine Achse drehbares Hahnküken (10) ausgebildet ist.

2. Einrichtung nach Anspruch 1, **dadurch gekennzeichnet, daß** das Hahnküken (10) in der Schließstellung abdichtend gegen einen der Auslaßöffnung zugeordneten Kükensitz (11) anliegt, dessen in Strömungsrichtun unten liegender Öffnungsrand in der Öffnungsstellung in den Hahnkükendurchgang (10.3) ragt.

3. Einrichtung nach Anspruch 2, **dadurch gekennzeichnet, daß** der untere Öffnungsrand im wesentlichen schneidenartig ausgebildet ist.

4. Einrichtung nach Anspruch 1 oder 3, **dadurch gekennzeichnet, daß** der Kükensitz (11) auf einer Stützplatte (12) aufliegt, die eine der Öffnung des Kükensitzes (11) im wesentlichen entsprechende Öffnung hat, die sich in Strömungsrichtung von oben nach unten kegelförmig erweitert.

5. Einrichtung nach Anspruch 4, **dadurch gekennzeichnet, daß** die sich kegelförmig erweiternde Öffnung einen Öffnungswinkel von mehr als 100° hat, vorzugsweise im Bereich von 120° bis 140°.

6. Einrichtung nach einem der Ansprüche 1 bis 4, **dadurch gekennzeichnet, daß** das Hahnküken (10) ein Kugelküken ist.

7. Einrichtung nach Anspruch 6, **dadurch gekennzeichnet, daß** das Hahnküken (10) diametral gegenüberliegend mittels Zapfen(10.1, 10.2) gelagert ist.

8. Einrichtung nach einem der Ansprüche 4 bis 7, **dadurch gekennzeichnet, daß** die Stützplatte (12) einen nach oben gerichteten, den Kükensitz seitlich umschließenden Rand hat.

9. Einrichtung nach einem der Ansprüche 1 bis 8, **dadurch gekennzeichnet, daß** sie ein Rohrstück (1) mit einem durchgehenden Strömungskanal aufweist, in den das Hahnküken (10) teilweise ragt.

10. Einrichtung nach Anspruch 9, **dadurch gekennzeichnet, daß** an den Strömungskanal hintereinander liegend zwei ein Hahnküken aufweisende Abfülleinheiten anschließen, wobei die Hahnkükendurchgänge unterschiedliche Strömungsquerschnitte haben, derart, daß das eine einen größeren Strömungsquerschnitt aufweisende Hahnküken für die Grobstromabfüllung und das andere Hahnküken für die Feinstromabfüllung dienen.

11. Verwendung einer Einrichtung nach einem der Ansprüche 1 bis 10 zum Abfüllen eines hochviskosen Mediums.

12. Verwendung einer Einrichtung nach einem der Ansprüche 1 bis 10 zum Abfüllen eines hochviskosen Mediums mit einem dynamischen Viskosität im Bereich von etwa 100 - 1000 Pa·s, insbesondere von etwa 600 Pa·s.
